# EUROPEAN PATENT APPLICATION

(11) **EP 4 411 881 A1**
(43) Date of publication of application: **07.08.2024**
(21) Application number: 22875759.7
(22) Date of filing: 08.09.2022
(51) Int. Cl.: H01M 4/38, H01M 4/36

(54) **NEGATIVE ELECTRODE ACTIVE MATERIAL FOR SECONDARY BATTERY, AND SECONDARY BATTERY**

(30) Priority: 28.09.2021 JP 2021157912
(71) Applicant: Panasonic Intellectual Property Management Co., Ltd., Kadoma-shi, Osaka 571-0057 (JP)
(72) Inventor: OKI, Yukihiro, Kadoma-shi, Osaka 571-0057 (JP); ASANO, Kazuko, Kadoma-shi, Osaka 571-0057 (JP); NAKURA, Kensuke, Kadoma-shi, Osaka 571-0057 (JP); HIBINO, Mitsuhiro, Kadoma-shi, Osaka 571-0057 (JP)
(74) Representative: Novagraaf International SA
(86) International application number: PCT/JP2022/033672
(87) International publication number: WO 2023/053887

(57) **Abstract**

Disclosed is a negative electrode active material for a secondary battery containing: a composite material that has a silicide phase and a silicon phase, wherein the silicide phase contains an intermetallic compound of a silicon element and a metal element Me other than the silicon element, the metal element Me includes N kinds or more constituent elements Mi, where i = 1 to N, and 5 ≤ N, and a condition represented by the following expression is satisfied: 1.5 < -ΣCi • lnCi, where Ci represents a mole fraction of each of the N kinds or more constituent elements Mi.

## Description

### [Technical Field]

The present invention relates primarily to a negative electrode active material for a secondary battery.

### [Background Art]

Non-aqueous electrolyte secondary batteries, in particular, lithium ion secondary batteries have high voltage and high energy density, and thus they are expected to be used for small consumer applications, power storage devices, and power sources for electric vehicles. Under the circumstances where there is demand for higher energy density batteries, the use of an alloy material that contains silicon that can be alloyed with lithium is expected as a negative electrode active material that has a high theoretical capacity density (for example, Patent Literature 1).

Patent Literature 1 proposes am electrode material for a negative electrode for a lithium secondary battery, the electrode material containing particles of an amorphous M, A, and X alloy that has a substantially non-stoichiometric composition, where M represents at least one element selected from the group consisting of Si, Ge, and Mg, A represents at least one element selected from transition metal elements, X represents at least one element selected from the group consisting of O, F, N, Ba, Sr, Ca, La, Ce, P, S, Se, Te, B, Bi, Sb, Al, In, and Zn, and the amount of the constituent element M of the amorphous M, A, and X alloy satisfies (M + A + X) = 20 to 80 atom%.

Patent Literature 2 proposes a negative electrode material for a non-aqueous electrolyte secondary battery that contains a crystalline alloy represented by the following general formula (1): AₐSi_{b}M_{c}T_{d}XₑR_{f}, where A represents at least one element selected from the group consisting of Mg, Ca, and Sr, M represents at least one element selected from the group consisting of Co, Ni, Fe, Cu, Mn, V, and Cr, T represents at least one element selected from the group consisting of Ti, Zr, Hf, Nb, Ta, Mo, and W, X represents at least one element selected from the group consisting of Sn, Al, Sb, Zn, and In, R represents at least one element selected from rare earth elements, and a, b, c, d, e, and f satisfy a + b + c + d + e + f = 100 atom%, 10 ≤ a ≤ 50, 35 ≤ b ≤ 65, 0 < c ≤ 30,0 ≤ d ≤ 10,0 ≤ e ≤ 25, and 0 ≤ f ≤ 20.

Patent Literature 3 proposes a negative electrode active material for a non-aqueous electrolyte secondary battery that is composed of an alloy of Si and a metal element that cannot be alloyed with Li, wherein the atomic ratio of the metal element that cannot be alloyed with Li is 15 atom% or more and 35 atom% or less, and when X-ray diffraction measurement using CuKα rays is performed, no diffraction peaks with a half width of 1.5° or less derived from the alloy components are observed in a range of diffraction angle 2θ of 20 to 60°.

### [Citation List]

### [Patent Literatures]

[PTL 1] WO 2000/017949 (Japanese Patent No. 3733292)
[PTL 2] Laid-Open Patent Publication No. 2005-100876 (Japanese Patent No. 4703110)
[PTL 3] WO 2015/060443

### [Summary of Invention]

### [Technical Problem]

On the other hand, the alloy materials proposed in Patent Literatures 1 to 3 are known to have a large volume change during intercalation and deintercalation (charge and discharge) of lithium ions.

### [Solution to Problem]

One aspect of the present invention relates to a negative electrode active material for a secondary battery containing: a composite material that has a silicide phase and a silicon phase, wherein the silicide phase contains an intermetallic compound of a silicon element and a metal element Me other than the silicon element, the metal element Me includes N kinds or more constituent elements Mi, where i = 1 to N, and 5 ≤ N, and a condition represented by the following expression is satisfied: 1.5 < -ΣCi • lnCi, where Ci represents a mole fraction of each of the N kinds or more constituent elements Mi.

Another aspect of the present invention relates to a secondary battery that includes a positive electrode, a negative electrode, and an electrolyte, wherein the negative electrode contains the above-described negative electrode active material for a secondary battery.

### [Advantageous Effects of Invention]

The present invention provides a negative electrode active material for a secondary battery that has a small volume change during intercalation and deintercalation of lithium ions.

Novel features of the present invention are set forth in the appended claims. However, the present invention will be well understood from the following detailed description of the present invention with reference to the drawings, in terms of both the configuration and the content together with other objects and features of the present invention.

### [Brief Description of Drawings]

[FIG. 1] Fig. 1 is a diagram showing charge/discharge curves of cells produced in Examples.
[FIG. 2] Fig. 2 is a diagram showing charge/discharge curves of cells produced using negative electrode active materials that have different Si contents.
[FIG. 3] Fig. 3 is a diagram showing X-ray diffraction patterns of the negative electrode active materials.

### [Description of Embodiment]

Hereinafter, an embodiment of the present disclosure will be described by way of examples. However, the present disclosure is not limited to the examples given below. In the following description, specific numerical values and materials may be used as examples. However, other numerical values and materials may also be used as long as the advantageous effects of the present disclosure can be obtained. As constituent elements other than the characteristic features of the present disclosure, known secondary battery constituent elements may also be used. In the specification of the present application, the expression "a range of a numerical value A to a numerical value B" means that the range includes the numerical value A and the numerical value B. In the following description, lower and upper limits of numerical values of specific physical properties, conditions, and the like will be shown. The lower limits and the upper limits shown below can be combined in any way as long as the lower limits are not greater than or equal to the upper limits. In the case where a plurality of materials are listed, only one material may be selected from among the plurality of materials, or a combination of two or more may be selected from among the plurality of materials.

Also, the present disclosure encompasses a combination of features defined in two or more claims arbitrarily selected from a plurality of claims recited in the appended claims of the present application. That is, features defined in two or more claims arbitrarily selected from a plurality of claims recited in the appended claims of the present application can be combined as long as they do not technically contradict to each other.

The term "secondary battery" used herein encompasses at least a non-aqueous electrolyte secondary battery such as a lithium ion battery, a solid-state battery, and the like.

### [Composite Material]

A negative electrode active material for a secondary battery according to an embodiment of the present invention contains a composite material that has a silicide phase and a silicon phase. The silicide phase refers to a phase that is composed of a silicide, and the silicon phase refers to a phase that is composed of silicon (a silicon element).

The silicide phase of the present embodiment contains five or more silicides in a mixed manner. Specifically, the silicide phase contains an intermetallic compound of a silicon element and a metal element Me other than the silicon element. The metal element Me includes N kinds or more constituent elements Mi, where i = 1 to N, and 5 ≤ N.

Here, a condition represented by the following expression is satisfied:
1.5 < -ΣCi • lnCi, where Ci represents a mole fraction of each of the N kinds or more constituent elements Mi (where ΣCi = 1).

Hereinafter, the condition in which the above-described expression: 1.5 < -ΣCi • lnCi is satisfied may also be referred to as a "high entropy condition". At this time, entropy S that represents a state of the N kinds or more constituent elements Mi is represented by S = - RΣCi • lnCi, and S > 1.5R is satisfied. R represents a gas constant (J/(mol • K)).

In the silicide phase, in the case where the N kinds or more constituent elements Mi included in the metal element Me satisfy the high entropy condition, the mechanical strength of the silicide phase tends to be remarkably high. In a composite material that has a silicide phase and a silicon phase, when the silicon phase undergoes a large volume change during intercalation and deintercalation of lithium ions, the volume change of the composite material is remarkably suppressed by the silicide phase.

The content of the silicon element in the composite material may be, for example, greater than 50 atom%, 70 atom% or more, or 75 atom% or more. The capacity increases as the content of the silicon element in the composite material increases. On the other hand, the content of the metal element Me other than the silicon element in the composite material is desirably 10 atom% or more, and may be 20 atom% or more. With this configuration, a significant amount of the silicide phase is ensured in the composite material, and thus the volume change of the composite material is more remarkably suppressed. In the case where the atomic ratio Si:Me = 1:1, it is considered that most of the composite material turns into the silicide phase, and thus the capacity is reduced. On the other hand, in the case where the atomic ratio Si:Me = (3 to 4):1, a sufficient amount of the silicon phase is ensured in the composite material, and thus, for example, a capacity of 1380 mA/g to 1640 mAh/g can be ensured.

The average value (average atomic weight) of atomic weights of the N kinds or more constituent elements Mi is, for example, 60 or less. The smaller the average atomic weight, the higher the capacity density per mass of the composite material. Accordingly, the composite material is expected to be used as a promising negative electrode active material. When the average atomic weight is 60 or less, the composite material can achieve a capacity density higher than that of, for example, SiO (silicon oxide). However, from the viewpoint of increasing the charge/discharge efficiency of the composite material, the average atomic weight is desirably, for example, 50 or more. Although the reason is not clear, the charge/discharge efficiency of the composite material tends to be higher as the average atomic weight is higher.

The average atomic weight is represented by ΣAi • Ci, where Ai represents the atomic weight of the N kinds or more constituent elements Mi, and Ci represents a mole fraction of each of the N kinds or more constituent elements Mi.

The N kinds or more constituent elements Mi may be contained in at least one of MiSi and MiSi₂. In other words, the silicide phase may be composed of an intermetallic compound such as MeSi or MeSi₂.

It is desirable that substantially all of the N kinds or more constituent elements Mi constitute the intermetallic compound. In this case, the content of a simple substance of the N kinds or more constituent elements Mi contained in the composite material may be 1 mass% or less or 10,000 ppm or less in total, or may be substantially 0 mass%. From the viewpoint of increasing the mechanical strength of the silicide phase, it is desirable that all of the constituent elements Mi that satisfy the high entropy condition form the intermetallic compound as described above.

The N kinds or more constituent elements Mi may be elements that have an atomic weight less than or equal to atomic weights of elements included in the fourth period of the long-period periodic table. In this case, the average atomic weight of the N kinds or more constituent elements Mi will be relatively small, and thus the capacity density of the composite material can be easily increased.

The N kinds or more constituent elements Mi may be, for example, at least five elements selected from the group consisting of Al, Mg, Ti, V, Cr, Mn, Fe, Co, Ni, Cu, and Mo.

The N kinds or more constituent elements Mi may be elements that have an atomic weight less than or equal to 29 (Cu). In this case, the average atomic weight of the N kinds or more constituent elements Mi will be smaller, and thus the capacity density of the composite material can be more easily increased.

The N kinds or more constituent elements Mi may be at least five elements selected from the group consisting of Al, Mg, Ti, V, Cr, Mn, Fe, Co, Ni, and Cu.

The N kinds or more constituent elements Mi may be all transition metals. In this case, the charge/discharge efficiency of the composite material can be easily increased.

The N kinds or more constituent elements Mi may be, for example, five elements selected from the group consisting of Ti, V, Cr, Mn, Fe, Co, Ni, and Cu.

The composition of the composite material can be determined based on, for example, an inductively coupled plasma emission spectroscopy analysis method (ICP). For example, a sample of the composite material is completely dissolved in a heated acid solution (for example, a mixed acid of hydrofluoric acid, nitric acid, and sulfuric acid), and solution residue is filtered and removed, and then the resultant is subjected to ICP analysis to measure the spectrum intensity of each element. Next, a calibration curve is created using a commercially available element standard solution, and the amount of each element contained in the composite material is calculated.

Whether the composite material has a silicide phase and a silicon phase can be checked by capturing an image of a cross section of the composite material using a scanning electron microscope (SEM) and observing the image. Cross-sectional observation of composite particles can be performed using, for example, the following method. First, a cured product of thermosetting resin filled with particles of the composite material is formed. A cross section of the cured product is formed using a cross section polisher (CP), and then observed using an SEM. Also, the cross section of the composite material particles may be subjected to element mapping analysis using energy dispersive X-ray spectroscopy (EDX) to perform quantitative and qualitative analysis of the silicide phase and the silicon phase.

Also, whether substantially all of the N kinds or more constituent elements Mi form the intermetallic compound and the content of a simple substance of the metal elements is substantially 0 mass% can be checked by subjecting the composite material to X-ray diffraction measurement.

### [Method for Producing Composite Material]

The composite material can be produced by weighing metal lumps of elements that are raw materials to be a specific atomic ratio, then simultaneously melting them into a molten metal, and cooling the molten metal. It is desirable that the raw materials are melted in an inert gas atmosphere such as argon using an arc melting furnace. After cooling the molten metal, a composite material that has a desired composition is obtained as a metal lump.

In the metal lump obtained by cooling the molten metal, the silicide (intermetallic compound) may not be sufficiently crystallized. Accordingly, it is desirable to heat the metal lump under a reduced pressure atmosphere or a vacuum atmosphere of 2.0 × 10⁻³ Pa or less to anneal the metal lump. The heating temperature during annealing may be set to, but is not particularly limited to, 600°C or more and 900°C or less. The heating time during annealing may be set to, but is not particularly limited to, 10 hours or more and 120 hours or less.

### [Secondary Battery]

A secondary battery according to an embodiment of the present invention includes a positive electrode, a negative electrode, and an electrolyte, wherein the negative electrode contains the above-described composite material as at least a portion of a negative electrode active material. Hereinafter, the secondary battery will be described in detail by taking a lithium ion secondary battery as an example.

### [Negative Electrode]

The negative electrode may include a negative electrode current collector and a negative electrode material mixture layer supported on a surface of the negative electrode current collector. The negative electrode material mixture layer can be formed by applying a negative electrode slurry prepared by dispersing a negative electrode material mixture in a dispersion medium onto the surface of the negative electrode current collector, and drying the formed coating film. The coating film after drying may be rolled as needed.

The negative electrode material mixture contains the above-described composite material as an essential component of the negative electrode active material, and may also contain a binder, a conductive agent, a thickener, and the like as optional components.

The negative electrode active material may contain, in addition to the composite material, a material that can electrochemically absorb and desorb lithium ions. There is no particular limitation on the material that can electrochemically absorb and desorb lithium ions. However, a carbon material can be used. Examples of the carbon material include graphite, graphitizable carbon (soft carbon), non-graphitizable carbon (hard carbon), and the like.

As the negative electrode current collector, a non-porous conductive substrate (a metal foil or the like) or a porous conductive substrate (a mesh, a net, a punched sheet, or the like) may be used. The negative electrode current collector may be made using a material such as, for example, stainless steel, nickel, a nickel alloy, copper, or a copper alloy.

Examples of the binder include resin materials including: for example, fluorine resins such as polytetrafluoroethylene and polyvinylidene fluoride (PVDF); polyolefin resins such as polyethylene and polypropylene; polyamide resins such as aramid resin; polyimide resins such as polyimide and polyamide imide; acrylic resins such as polyacrylic acid, polymethyl acrylate, and an ethylene-acrylic acid copolymer; vinyl resins such as polyacrylonitrile and polyvinyl acetate; polyvinyl pyrrolidone; polyether sulfone; rubbery materials such as a styrene-butadiene copolymer rubber (SBR); and the like. These binders may be used alone or in a combination of two or more.

Examples of the conductive agent include: carbons such as acetylene black; conductive fibers such as carbon fibers and metal fibers; carbon fluoride; metal powders such as aluminum; conductive whiskers such as zinc oxide and potassium titanate; conductive metal oxides such as titanium oxide; organic conductive materials such as a phenylene derivative; and the like. These conductive agents may be used alone or in a combination of two or more.

Examples of the thickener include: carboxymethyl cellulose (CMC), modified forms thereof (including salts such as a Na salt), cellulose derivatives such as methyl cellulose (cellulose ether, and the like); saponified products of polymers that have a vinyl acetate unit such as polyvinyl alcohol; polyethers (polyalkylene oxides such as polyethylene oxide, and the like); and the like. These thickeners may be used alone or in a combination of two or more.

### [Positive Electrode]

The positive electrode may include a positive electrode current collector and a positive electrode material mixture layer supported on a surface of the positive electrode current collector. The positive electrode material mixture layer can be formed by applying a positive electrode slurry prepared by dispersing a positive electrode material mixture in a dispersion medium onto the surface of the positive electrode current collector, and drying the formed coating film. The coating film after drying may be rolled as needed.

The positive electrode material mixture contains a positive electrode active material as an essential component, and may also contain a binder, a conductive agent, and the like as optional components.

As the positive electrode active material, for example, a lithium-containing composite oxide can be used. Examples of the lithium-containing composite oxide include LiₐCoO₂, LiₐNiO₂, LiₐMnO₂, LiₐCo_{b}Ni_{1-b}O₂, LiₐCo_{b}Me_{1-b}O_{c}, LiₐNi_{1-b}Me_{b}O_{c}, LiₐMn₂O₄, LiₐMn_{2-b}Me_{b}O₄, LiMePO₄, and Li₂MePO₄F, where Me represents at least one element selected from the group consisting of Na, Mg, Sc, Y, Mn, Fe, Co, Ni, Cu, Zn, Al, Cr, Pb, Sb, and B. Here, a = 0 to 1.2, b = 0 to 0.9, and c = 2.0 to 2.3. The value of a that represents the molar ratio of lithium varies during charging and discharging.

As the binder and the conductive agent, those listed as examples of the binder and the conductive agent that can be used in the negative electrode can be used. As the conductive agent, graphite such as natural graphite or artificial graphite may also be used

The shape and the thickness of the positive electrode current collector can be selected from the shapes and the thickness value range that conform to those of the negative electrode current collector. The positive electrode current collector may be made using a material such as, for example, stainless steel, aluminum, an aluminum alloy, or titanium.

### [Electrolyte]

The electrolyte contains a solvent and a lithium salt dissolved in the solvent. The concentration of the lithium salt in the electrolyte is preferably, for example, 0.5 mol/L or more and 2 mol/L or less. When the lithium salt concentration is set within the above-described range, it is possible to obtain an electrolyte that has excellent ion conductivity and an appropriate viscosity. However, the lithium salt concentration is not limited thereto.

As the solvent, an aqueous solvent or a non-aqueous solvent can be used. As the non-aqueous solvent, for example, a cyclic carbonic acid ester, a linear carbonic acid ester, a cyclic carboxylic acid ester, a linear carboxylic acid ester, or the like can be used. Examples of the cyclic carbonic acid ester include propylene carbonate (PC), ethylene carbonate (EC), and the like. Examples of the linear carbonic acid ester include diethyl carbonate (DEC), ethyl methyl carbonate (EMC), dimethyl carbonate (DMC), and the like. Examples of the cyclic carboxylic acid ester include γ-butyrolactone (GBL), γ-valerolactone (GVL), and the like. Examples of the linear carboxylic acid ester include methyl formate, ethyl formate, propyl formate, methyl acetate, ethyl acetate, propyl acetate, methyl propionate, ethyl propionate, propyl propionate, and the like. These non-aqueous solvents may be used alone or in a combination of two or more.

Examples of the lithium salt include LiClO₄, LiBF₄, LiPF₆, LiAlCl₄, LiSbF₆, LiSCN, LiCF₃SO₃, LiCF₃CO₂, LiAsF₆, LiB₁₀Cl₁₀, a lithium lower aliphatic carboxylate, LiCl, LiBr, LiI, a boric acid salt, an imide salt, and the like. Examples of the imide salt include LiN(FSO₂)₂, LiN(CF₃SO₂)₂, LiN(CF₃SO₂)(C₄F₉SO₂), LiN(C₂F₅SO₂)₂, and the like. These lithium salts may be used alone or in a combination of two or more.

### [Separator]

It is usually desirable to provide a separator between the positive electrode and the negative electrode. The separator has high ion permeability, an appropriate mechanical strength, and insulation properties. As the separator, a micro-porous thin film, a woven fabric, a non-woven fabric, or the like can be used. The material of the separator is preferably a polyolefin such as polypropylene or polyethylene.

As an example of a structure of a secondary battery, the secondary battery may have a structure in which an electrode group and an electrolyte are housed in an outer case. The electrode group may be a wound electrode group formed by spirally winding a positive electrode and a negative electrode with a separator interposed therebetween, a stacked electrode group formed by stacking a positive electrode and a negative electrode with a separator interposed therebetween, or any other type of electrode group. The secondary battery may have any shape such as a cylindrical shape, a prismatic shape, a coin shape, a button shape, or a laminate shape.

Hereinafter, the present invention will be described specifically based on examples and comparative examples. However, it is to be noted that the present invention is not limited to the examples given below.

### <Example 1>

### [Production of Composite Material]

A composite material was prepared, the composite material having an atomic ratio Si:Me = 4:1 (that is, with an Si content of 80 atom%), where Me represents constituent elements composed of five transition metals including Ti, V, Cr, Zr, and Mo in equimolar amounts, has an average atomic weight of 68, and satisfies the high entropy condition. Specifically, the raw materials were placed onto a water-cooled copper hearth provided in an arc melting furnace, the inside of the arc melting furnace was purged with an argon atmosphere, and the raw materials were melted and cooled quickly using an arc melting method to obtain a button-shaped metal lump. The surface of the button-shaped metal lump in contact with the water-cooled copper hearth was constantly in a cooled state, and thus the sample was cooled instantaneously when the application of arc is stopped. Then, the step of turning over the obtained metal lump in the furnace using a turning bar, again melting and cooling quickly the metal lump using an arc melting method, and further turning over the metal lump and melting and cooling quickly the metal lump was repeated five times. In this way, the composite material in the form of a metal lump was obtained. Next, the obtained metal lump was sealed in a quartz tube in a vacuum of 2.0 × 10⁻³ Pa or less, and annealed at 800°C for 48 hours for the crystallization to sufficiently proceed. The metal lump after annealing was pulverized into a particle size of 25 to 45 µm using a mortar, and the pulverized composite material particles were used as a negative electrode active material.

### [Production of Negative Electrode]

A negative electrode slurry was prepared by mixing a negative electrode material mixture containing the composite material, carbon black, SBR, and CMC at a mass ratio of 95:0.5:1.5:3.0 with an appropriate amount of water. Next, the negative electrode slurry was applied onto a surface of a copper foil such that the mass of the negative electrode material mixture was 150 g/m² of the surface of the copper foil. The formed coating film was dried and rolled to produce an electrode plate composed of a negative electrode material mixture layer with a density of 2g/cm³ formed on one side of the copper foil. The electrode plate was punched into a circular shape with a diameter of 12.5 mm, and the punched electrode plate was used as a negative electrode.

### [Production of Counter Electrode]

A counter electrode was produced by punching a metal lithium foil with a thickness of 300 µm into a circular shape with a diameter of 17 mm.

### [Preparation of Non-Aqueous Electrolyte]

A non-aqueous electrolyte was prepared by dissolving LiPF₆ at a concentration of 1.0 mol/L in a mixed solvent containing ethylene carbonate and ethyl methyl carbonate at a volume ratio of 1:3.

### [Production of Coin-Shaped Cell]

A stainless steel bottomed cell case with an opening was prepared, and the negative electrode and a separator were placed in this order in the cell case. As the separator, a polyphenylene sulfide (PPS) non-woven fabric with a thickness of 0.45 mm was used. Also, a stainless steel sealing plate with a polypropylene gasket provided around a peripheral portion of the sealing plate was prepared, and the lithium foil was attached to the inner surface of the sealing plate as a counter electrode. The electrolyte solution was injected into the cell case, and then, the opening of the cell case was closed with the sealing plate. In this way, a cell A1 was produced. As the cell size, the cell A1 had a diameter of 20 mm and a thickness of 3.2 mm.

### [Charge/Discharge Curve]

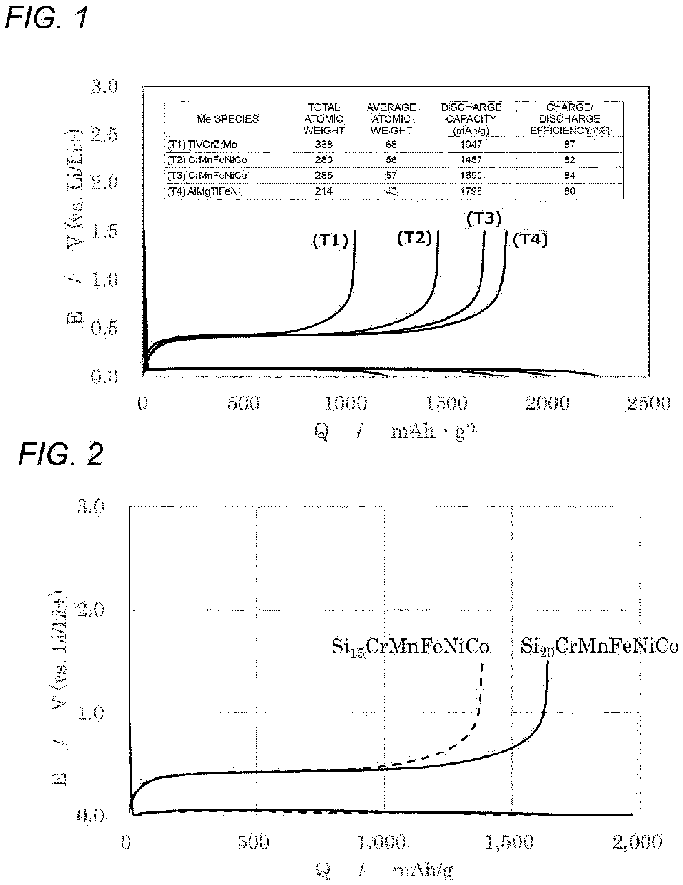

The assembled cell A1 was subjected to charging and discharging such that the negative electrode was charged at 0.1 mA to a voltage of 0.01 V at 25°C, and then discharged to a voltage of 1.5 V A charge/discharge curve during the first charge/discharge of the cell obtained at this time is shown in Fig. 1. Also, the discharge capacity during the first charge/discharge of the cell and the ratio of discharge capacity relative to charge capacity (charge/discharge efficiency) are shown in Table 1. From Fig. 1 and Table 1, it can be seen that the cell A1 has a capacity density of 1047 mAh/g. Also, the charge/discharge efficiency was as high as 87%.

### <Example 2>

A cell A2 was assembled and evaluated by preparing a composite material in the same manner as in Example 1, the composite material having an atomic ratio Si:Me = 4:1, where Me represents constituent elements composed of five transition metals including Cr, Mn, Fe, Ni, and Co in equimolar amounts, has an average atomic weight of 56, and satisfies the high entropy condition. A charge/discharge curve during the first charge/discharge of the cell obtained at this time is shown in Fig. 1. Also, the discharge capacity during the first charge/discharge of the cell and the ratio of discharge capacity relative to charge capacity (charge/discharge efficiency) are shown in Table 1. From Fig. 1 and Table 1, it can be seen that the cell A2 has a capacity density of 1457 mAh/g. Also, the charge/discharge efficiency was 82%.

### <Example 3>

A cell A3 was assembled and evaluated by preparing a composite material in the same manner as in Example 1, the composite material having an atomic ratio Si:Me = 4:1, where Me represents constituent elements composed of five transition metals including Cr, Mn, Fe, Ni, and Cu in equimolar amounts, has an average atomic weight of 57, and satisfies the high entropy condition. A charge/discharge curve during the first charge/discharge of the cell obtained at this time is shown in Fig. 1. Also, the discharge capacity during the first charge/discharge of the cell and the ratio of discharge capacity relative to charge capacity (charge/discharge efficiency) are shown in Table 1. From Fig. 1 and Table 1, it can be seen that the cell A3 has a capacity density of 1690 mAh/g. Also, the charge/discharge efficiency was 84%.

### <Example 4>

A cell A4 was assembled and evaluated by preparing a composite material in the same manner as in Example 1, the composite material having an atomic ratio Si:Me = 4:1, where Me represents constituent elements composed of five transition metals including Al, Mg, Ti, Fe, and Ni in equimolar amounts, has an average atomic weight of 57, and satisfies the high entropy condition. A charge/discharge curve during the first charge/discharge of the cell obtained at this time is shown in Fig. 1. Also, the discharge capacity during the first charge/discharge of the cell and the ratio of discharge capacity relative to charge capacity (charge/discharge efficiency) are shown in Table 1. From Fig. 1 and Table 1, it can be seen that the cell A4 has a capacity density of 1798 mAh/g. Also, the charge/discharge efficiency was 80%.

**[Table 1]**

| Cell | Composite material (25 to 45 µm) | Average atomic weight | Discharge capacity (mAh/g) | Charge/discharge efficiency (%) |
|---|---|---|---|---|
| A1 | Si₂₀TiVCrZrMo | 68 | 1047 | 87 |
| A2 | Si₂₀CrMnFeNiCo | 56 | 1457 | 82 |
| A3 | Si₂₀CrMnFeNiCu | 57 | 1690 | 84 |
| A4 | Si₂₀AlMgTiFeNi | 43 | 1798 | 80 |

### <Example 5>

A cell A5 was assembled and evaluated by preparing a composite material in the same manner as in Example 1, the composite material having an atomic ratio Si:Me = 3:1 (that is, with an Si content of 75 atom%) and also having the same composition of Me as that of Example 2, except that the metal lump after annealing was pulverized into a particle size of 25 µm or less using a mortar. The discharge capacity during the first charge/discharge of the cell and the ratio of discharge capacity relative to charge capacity (charge/discharge efficiency) are shown in Table 2.

### <Example 2A>

A cell A22 was assembled and evaluated in the same manner as in Example 2, except that the metal lump after annealing was pulverized into a particle size of 25 µm or less using a mortar. The discharge capacity during the first charge/discharge of the cell and the ratio of discharge capacity relative to charge capacity (charge/discharge efficiency) are shown in Table 2.

**[Table 2]**

| Cell | Composite material (25 µm or less) | Average atomic weight | Discharge capacity (mAh/g) | Charge/discharge efficiency (%) |
|---|---|---|---|---|
| A22 | Si₂₀CrMnFeNiCo | 56 | 1640 | 83.4 |
| A5 | Si₁₅CrMnFeNiCo | 56 | 1383 | 84.5 |

Fig. 2 shows charge/discharge curves of the cell A22 and the cell A5 for comparison. A sufficiently high capacity composite material was obtained even when the atomic ratio Si:Me = 3:1. Also, in the case of the atomic ratio Si:Me = 4:1, the capacity increased remarkably as compared with the case where the atomic ratio Si:Me = 3:1. On the other hand, the charge/discharge efficiency was better as the silicon phase content was lower.

It is considered that the difference in capacity between the cell A2 shown in Table 1 and Fig. 1 and the cell A22 shown in Table 2 and Fig. 2 is caused by the difference in particle size. It is considered that the smaller the particle size, the higher the utilization rate of the capacity.

### [X-Ray Diffraction Analysis]

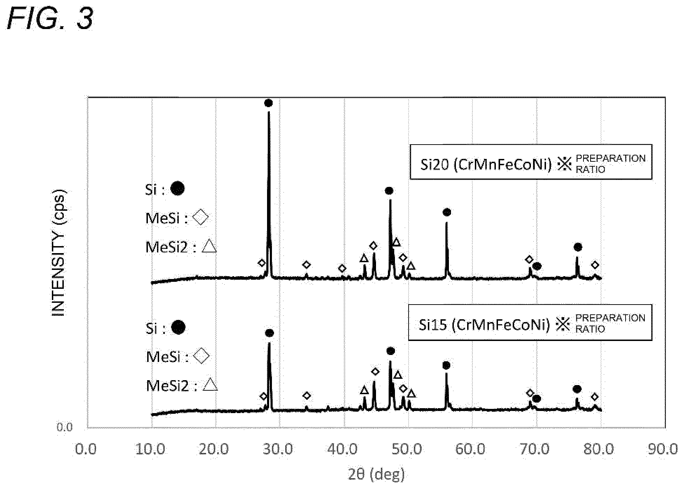

X-ray diffraction patterns obtained through X-ray diffraction analysis in Examples 2 and 5 are shown in Fig. 3. In the X-ray diffraction patterns, only peaks attributed to the silicon phase and peaks attributed to the silicide were observed, and no peak attributed to a simple substance of the constituent elements Mi of the metal element Me was observed. From this data, it can be understood that all of the constituent elements Mi of the metal element Me form an intermetallic compound.

Also, a cross section of the composite material of Example 2 was observed using an SEM based on the above-described method, from which it was confirmed that the composite material was substantially composed only of a silicide phase and a silicon phase. Furthermore, it was confirmed that each of the composite materials of Examples 1 to 5 has a high hardness as a silicide, and also has physical properties of being unlikely to cause volume change.

### [Industrial Applicability]

The negative electrode active material for a secondary battery according to the present invention is very useful as a negative electrode active material for use in secondary batteries for mobile applications (electric vehicles, mobile communication devices, portable electronic devices, and the like).

## Claims

1. A negative electrode active material for a secondary battery comprising:
a composite material that has a silicide phase and a silicon phase,
wherein the silicide phase contains an intermetallic compound of a silicon element and a metal element Me other than the silicon element,
the metal element Me includes N kinds or more constituent elements Mi, where i = 1 to N, and 5 ≤ N, and
a condition represented by the following expression is satisfied:
1.5 < -ΣCi • lnCi, where Ci represents a mole fraction of each of the N kinds or more constituent elements Mi.

2. The negative electrode active material for a secondary battery in accordance with claim 1,
wherein the content of the silicon element in the composite material is greater than 50 atom%.

3. The negative electrode active material for a secondary battery in accordance with claim 1 or 2,
wherein an average value of atomic weights of the N kinds or more constituent elements Mi is 60 or less.

4. The negative electrode active material for a secondary battery in accordance with any one of claims 1 to 3,
wherein the N kinds or more constituent elements Mi are contained in at least one of MiSi and MiSi₂.

5. The negative electrode active material for a secondary battery in accordance with any one of claims 1 to 4,
wherein the content of a simple substance of the N kinds or more constituent elements Mi contained in the composite material is 1 mass% or less.

6. The negative electrode active material for a secondary battery in accordance with any one of claims 1 to 5,
wherein the N kinds or more constituent elements Mi are all elements that have an atomic weight less than or equal to atomic weights of elements included in the fourth period of the long-period periodic table.

7. The negative electrode active material for a secondary battery in accordance with any one of claims 1 to 6,
wherein the N kinds or more constituent elements Mi are all elements that have an atomic weight less than or equal to 29 (Cu).

8. The negative electrode active material for a secondary battery in accordance with any one of claims 1 to 7,
wherein the N kinds or more constituent elements Mi are all transition metals.

9. The negative electrode active material for a secondary battery in accordance with any one of claims 1 to 5,
wherein the N kinds or more constituent elements Mi are at least five elements selected from the group consisting of Al, Mg, Ti, V, Cr, Mn, Fe, Co, Ni, Cu, and Mo.

10. The negative electrode active material for a secondary battery in accordance with any one of claims 1 to 7,
wherein the N kinds or more constituent elements Mi are at least five elements selected from the group consisting of Al, Mg, Ti, V, Cr, Mn, Fe, Co, Ni, and Cu.

11. The negative electrode active material for a secondary battery in accordance with any one of claims 1 to 8,
wherein the N kinds or more constituent elements Mi are at least five elements selected from the group consisting of Ti, V, Cr, Mn, Fe, Co, Ni, and Cu.

12. A secondary battery comprising:
a positive electrode;
a negative electrode; and
an electrolyte,
wherein the negative electrode contains the negative electrode active material for a secondary battery in accordance with any one of claims 1 to 11.
